# EUROPÄISCHE PATENTSCHRIFT

(11) **EP 1 869 741 B1**
(45) Veröffentlichungstag und Bekanntmachung des Hinweises auf die Patenterteilung: **11.04.2018**
(21) Anmeldenummer: 06706975.7
(22) Anmeldetag: 16.02.2006
(51) Int. Cl.: H02G 3/08, H02G 3/14

(54) **ELEKTRISCHER ANSCHLUSSKASTEN**
ELECTRIC CONNECTION BOX
BOITE DE BRANCHEMENT ELECTRIQUE

(30) Priorität: 01.04.2005 DE 102005015310
(43) Veröffentlichungstag der Anmeldung: 26.12.2007
(73) Patentinhaber: SEW-EURODRIVE GmbH & Co. KG, 76646 Bruchsal (DE)
(72) Erfinder: LERCH, Heiko, 76761 Rülzheim (DE); DAMINGER, Franz, 76694 Forst (DE)
(86) Internationale Anmeldenummer: PCT/EP2006/001373
(87) Internationale Veröffentlichungsnummer: WO 2006/102953

(56) Entgegenhaltungen:
- EP-A- 0 552 780
- US-A- 4 733 015
- US-A1- 2004 089 467

## Beschreibung

Die Erfindung betrifft ein Gerät.

Aus der DE 103 32 392 A1 ist ein Feldgerät zum dezentralen Einsatz in einer Anlage bekannt, das wasserdicht ausgeführt ist. Es besteht aus einem Unterteil und einer als Oberteil aufgesetzten Haube. Das Oberteil wird entlang einer Führungsschiene. Allerdings wird zum Abheben, also Trennen der beiden Teile, sehr viel Platz benötigt.

**Aus der** EP 0 552 780 A1 **ist ein elektrischer Anschlusskasten mit einem abgeschrägt ausgeführtem Deckelteil bekannt.**

Aus der US 4733015 ist eine Anschlussvorrichtung mit abgeschrägt ausgeführtem Deckelteil bekannt.

Der Erfindung liegt daher die Aufgabe zugrunde, den Bauraum und den benötigten Platz für ein Feldgerät und seine Wartung kleiner, also kompakter, zu gestalten.

Erfindungsgemäß wird die Aufgabe bei dem Gerät nach den in Anspruch 1 angegebenen Merkmalen gelöst.

Wichtige Merkmale der Erfindung bei dem Gerät sind, dass das Gerät zumindest ein Oberteil, das auf ein Unterteil aufsetzbar ist, umfasst,
wobei das Oberteil einen Raumbereich für mindestens eine elektronische Schaltung und das Unterteil mindestens einen Raumbereich für Anschlussvorrichtungen umfasst,
wobei die Oberkante des Unterteils von der Rückseite zur Vorderseite hin schräg abnehmend verläuft.

Alternativ ausgedrückt, nimmt die Höhe des Unterteils von der Rückseite zur Vorderseite hin ab.

Von Vorteil ist dabei, dass ein möglichst kleiner Betätigungswinkel für die unterste Anschlussvorrichtung erreichbar ist. Denn die an der Unterseite im Innenraum des Unterteils positionierte Anschlussvorrichtung ist mit der Hand oder mit einem Werkzeug zwar auch bei einem Quaderförmigen Unterteil erreichbar. Jedoch ist der Winkel gegen die Horizontale bei der schrägen Ausführung geringer. Wichtig ist dabei, dass die Betätigung des Geräts von der Vorderseite her geschieht. Dies ermöglicht den Einbau des Gerätes in eine Umgebung, in welcher Begrenzungen des Raumbereichs um das Gerät herum an allen anderen Seiten vorhanden sind. Beispielsweise ist das Gerät mit seiner Rückseite an eine Wand oder Ähnliches montiert. Diese ist also nicht zugänglich. Die Zugänglichkeit des Gerätes von oben oder von den beiden seitlichen Seiten ist ebenfalls begrenzt durch benachbart angebrachte Vorrichtungen, wie Schutzzäune, Kästen, Maschinenteile oder dergleichen. Im Wesentlichen ist also das Gerät voll betätigbar, auch wenn es nur von der Vorderseite her zugänglich ist. Unter Betätigung wird insbesondere auch das Herstellen von elektrischen Verbindungen durch Einführen von Kabeln ins Unterteil und Verbinden der Kabel an Anschlussvorrichtungen, wie Klemmen, Klemmleisten, Lüsterklemmen, Schneidklemmen und viele weitere im Stand der Technik bekannte Anschlussvorrichtungen, verstanden. Meist ist zur Betätigung auch das Drehen einer Schraube an der Anschlussvorrichtung oder ein Drücken eines Teils der Anschlussvorrichtung mit dem Schraubendreher notwendig. Auch ein Löten kann zur Betätigung gehören. Das jeweilige Werkzeug ist bei der Erfindung von der Vorderseite her gut einführbar, weil das Unterteil schräg ausgeführt ist und somit der Betätigungswinkel kleiner ist als bei quaderförmiger Ausführung. Der minimale Betätigungswinkel ist durch die Schrägung verkleinerbar.

Bei dem Gerät handelt es sich vorteiligerweise um ein industrielles Gerät zum dezentralen Einsatz in einer Anlage. Die elektronische Schaltung ist also als Steuerung mit Ein- und Ausgängen und/oder als Umrichter zur Versorgung eines Elektromotors und/oder als Motorschalter und/oder als Sanftanlaufgerät für einen Elektromotor ausführbar. Sie ist abgedichtet im Oberteil vorgesehen. Auch die elektrische Übergabevorrichtung, wie Steckverbinder oder dergleichen, ist entsprechend abgedichtet ausgeführt. Auch die Herausführung von Licht mittels optischer Leiter ist ebenso dicht ausgeführt. Die Abdichtung ist derart gut ausgeführt, dass die elektronische Schaltung wasserdicht und luftdicht gegen den Raumbereich der Anschlussvorrichtungen angeordnet ist.

Darüber hinaus ist auch der Raumbereich der Anschlussvorrichtungen abgedichtet gegen die Umgebung ausgeführt. Dazu ist auch das Oberteil und das Unterteil mittels einer Dichtung abgedichtet verbindbar. Der Raumbereich der Anschlussvorrichtungen ist gegen die Umgebung auch abgedichtet. Jedoch ist ein Herstellen einer so hohen Schutzart und Dichtheit wie bei der elektronischen Schaltung nicht vorgesehen. Denn die Anschlussvorrichtungen sind nicht derart empfindlich wie die Bauteile der elektronischen Schaltung. Somit sind Kosten einsparbar. Denn eine absolute Luftdichtheit und Wasserdichtheit muss für die Anschlussvorrichtungen nicht hergestellt werden. Es genügt beispielsweise ein Spritzwasserschutz für die Anschlussvorrichtungen. Etwas Luftfeuchtigkeit kann in den Raumbereich der Anschlussvorrichtungen eintreten ohne Gefahr der Zerstörung für diese. Für die elektronische Schaltung gilt dies aber nicht. Daher ist hier eine luftdichte Abdichtung vorgesehen.

Bei einer vorteilhaften Ausgestaltung ist die Leiterplatte vertikal orientiert. Von Vorteil ist dabei, dass die Leiterplatte im Bereich der Rückseite des Unterteils anordenbar ist. Denn diese Rückseite ist höher als die seitlichen Seiten und die Vorderseite. Somit ist die Leiterplatte groß ausführbar, jedoch nicht derart groß, dass sie den vertikal auszuführenden Hub zum Trennen des Unterteils und des Oberteils bestimmt. Dieser Hub ist nur durch andere Komponenten bestimmt, wie Dichtung und/oder Steckverbinder.

Bei einer vorteilhaften Ausgestaltung weist die Vorderseite eine geringere Höhe auf als die Rückseite des Unterteils und das Oberteil ist entsprechend schräg ausgeführt. Von Vorteil ist dabei, dass die Zugänglichkeit mit einem Werkzeug zur untersten Anschlussvorrichtung besser ist als bei einem Gerät, dessen Unterteil an der Vorderseite eine gleich hohe Oberkante aufweist wie an der Rückseite.

Bei einer vorteilhaften Ausgestaltung ist zwischen Oberteil und Unterteil eine Dichtung angeordnet, welche das Oberteil von außen und das Unterteil von innen umgibt. Von Vorteil ist dabei, dass Wasser von oben kommend nicht in den Bereich der Dichtung laufen kann sondern um den Bereich der Dichtung herum geleitet wird.

Bei einer vorteilhaften Ausgestaltung sind Anschlussvorrichtungen des Unterteils auf einer Leiterplatte angeordnet. Von Vorteil ist dabei, dass die Fertigung automatisiert ausführbar ist und somit kostengünstig.

Bei einer vorteilhaften Ausgestaltung ist die Rückseite des Gerätes mit einer Führungsschiene verbunden. Von Vorteil ist dabei, dass der Hub geführt ausführbar ist und dabei Kippbewegungen des Oberteils verhinderbar sind.

Bei einer vorteilhaften Ausgestaltung umfasst das Oberteil mindestens ein Steckverbinderteil und das Unterteil mindestens das entsprechende Gegensteckverbinderteil. Von Vorteil ist dabei, dass handelsübliche Steckverbinderteile verwendbar sind und somit alle elektrischen Verbindungen mit einer einfach und kostengünstig gestalteteren Übergabesteckervorrichtung ausführbar sind.

Bei einer vorteilhaften Ausgestaltung ist mittels der Führungsschiene das Oberteil vom Unterteil um einen Hub abhebbar, währenddessen Ausführung Steckverbinderteil und Gegensteckverbinderteil verbindbar oder trennbar sind und wobei der Hub gleich oder größer ist als der für das Verbinden oder Trennen notwendige Hub. Von Vorteil ist dabei, dass der Hub so bemessen sein kann, dass das Verbinden und Trennen oben Kippbewegung ausführbar ist. Weitere Komponenten, wie beispielsweise Leiterplatten und/oder Anschlussvorrichtungen, beeinflussen die Größe des minimal notwendigen Hubs nicht.

Bei einer vorteilhaften Ausgestaltung ist mittels der Führungsschiene das Oberteil vom Unterteil um einen Hub abhebbar, währenddessen Ausführung die dichte Verbindung zwischen Oberteil und Unterteil lösbar ist. Von Vorteil ist dabei, dass der für die Dichtung notwendige Hub sehr viel kleiner ist als der für das Trennen und Verbinden der Steckverbinder. Somit ist der Wert des Hubs nicht beeinflusst von der Dichtung. Vorteiligerweise ist die Dichtung entsprechend ausgeführt.

Bei einer vorteilhaften Ausgestaltung weist an der Vorderseite das Oberteil eine beleuchtete Anzeige auf, wobei Lichtleiter aus dem Raumbereich der elektronischen Schaltung von dort vorhandenen Leuchtmitteln Licht zur Anzeige leiten. Von Vorteil ist dabei, dass die Anzeige im Oberteil vorsehbar ist, weil durch die Schräge im unteren Bereich Platz geschaffen ist zum Vorsehen einer Anzeige. Die Anzeige durchbricht nicht die den Raumbereich der Elektronik umgebende Haube sondern ist im Raumbereich der Anschlussvorrichtungen angeordnet. Somit ist keine Übergabe des Lichtes von Oberteil und Unterteil.

Bei einer vorteilhaften Ausgestaltung ist der Raumbereich der elektronischen Schaltung abgedichtet und/oder in hoher Schutzart ausgeführt gegen den Raumbereich der Anschlussvorrichtung und gegen die Umgebung. Von Vorteil ist dabei, dass die Elektronik großen Temperaturunterschieden ausgesetzt sein kann und trotzdem keine Luft in den Raumbereich der Elektronik eindringen kann, also auch keine Luftfeuchtigkeit.

Bei einer vorteilhaften Ausgestaltung ist ein aufklappbarer Berührschutz am Unterteil vorgesehen. Von Vorteil ist dabei, dass die Sicherheit in einfacher und kostengünstiger Weise verbesserbar ist.

Weitere Vorteile ergeben sich aus den Unteransprüchen.

### Bezugszeichenliste

1 Oberteil, Haube
2 Unterteil
3 Anschlussvorrichtungen
4 Steckverbinderteil des Oberteils
5 Entsprechendes Gegensteckverbinderteil des Unterteils
6 Leiterplatte
30 1. Kammer, Raumbereich der Elektronik
31 2. Kammer, Raumbereich der Anschlussvorrichtungen
32 Berandung der ersten Kammer
33 Lichtleiter
34 Sichtfenster
40 Schutzschalter
41 Berührschutz, aufklappbar
42 Dichtfläche zur Auflage der Dichtung 80 50 Schutzzaun
51 Wand
52 Führungsschiene
53 Winkeltrieb
54 Abhebevorrichtung
55 Werkzeugaufnahme
80 Dichtung
81 Blech
82 Leiterplatte für Elektronik

h minimaler Hub zum Trennen der Teile
α minimaler Betätigungswinkel

Die Erfindung wird nun anhand von Abbildungen näher erläutert:
Bezeichnungen in der vorliegenden Schrift, wie unten, oben, Horizontale, vertikal, Unterseite, Oberseite, Rückseite und Vorderseite sind der besseren Verständlichkeit anhand der Zeichnungen auch in den Ansprüchen verwendet. Diese Bezeichnungen sind aber bei der vorliegenden Erfindung so zu verstehen, dass auch andere Orientierungen beim Einbau des Gerätes von der Erfindung umfasst sind. Die Bezeichnungen sind dann entsprechend ihrer Bedeutung angepasst zu verstehen.

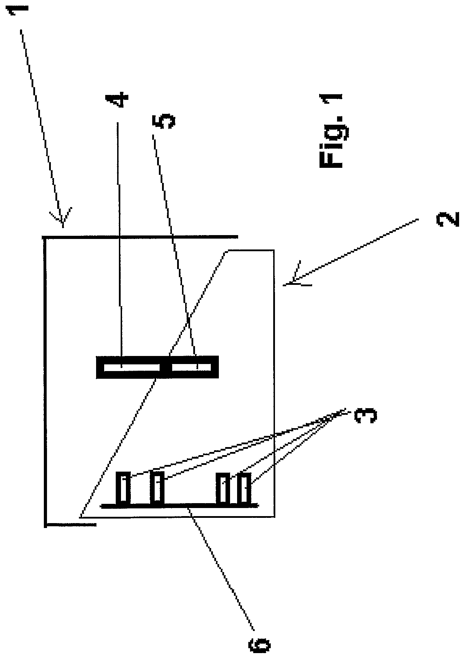

In der Figur 1 ist die erfindungsgemäße Vorrichtung symbolisch skizziert. Bei der Erfindung ist wesentlich, dass ein Oberteil 1 als Haube auf ein Unterteil 2 aufgesetzt wird. Somit fließt das Wasser außen gut ab.

Es genügt ein minimaler Hub h zum Trennen der Teile. Das Trennen erfolgt durch Ausführen des Hubs h nach oben. Danach kann die Haube 1 nach vorne abgezogen werden.

Der Hub h ist daher notwendig, weil das Oberteil 1 ein Steckverbinderteil 4 umfasst und das Unterteil 2 das entsprechenden Gegensteckverbinderteil 5 umfasst und die Steckverbinderteile in Hubrichtung ineinander gesteckt werden müssen. Außerdem ist eine in Figur 1 nicht gezeigte Führungsschiene in Richtung des Hubes h vorgesehen, die ein Verkippen des Oberteils gegen das Unterteils verhindert. Somit läuft das Ineinanderstecken der Steckverbinderteile ohne Verkanten oder andere Problematiken ab und die Reibungskräfte beim Stecken sind klein gehalten. Während der Hubbewegung wird außerdem eine nicht gezeigte Dichtung zwischen Oberteil und Unterteil aufgetrennt oder hergestellt.

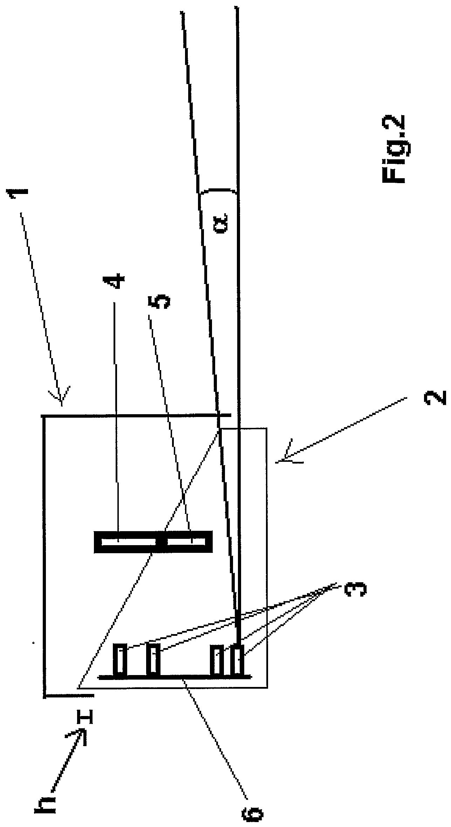

Der besondere Vorteil der Erfindung liegt in der kompakten Ausführung des Gerätes bei gleichzeitiger sehr guter Zugänglichkeit der Anschlussvorrichtungen 3 des Unterteils. Dies ist in Figur 2 angedeutet durch den minimalen Betätigungswinkel α, der beim Öffnen des Gerätes zur Verfügung steht, um mit einem Werkzeug, wie Schraubendreher oder dergleichen, eine Klemme einer Anschlussvorrichtung 3 zu betätigen. Beispielsweise ist ein Drehen einer Schraube an der untersten Anschlussvorrichtung 3 notwendig. Da die Schnittstelle des Unterteils und des Oberteils schräg ausgeführt sind, also nicht rechtwinklig, weist das Unterteil an der Vorderseite eine sehr niedrige Oberkante auf. Auf der Rückseite weist das Unterteil - wiederum der Schräge wegen - eine sehr hohe Oberkante auf.

Der minimale Betätigungswinkel α ist derart als Winkel gegen die Horizontale definiert, dass ein möglichst niedrig gehaltenes Werkzeug von der Vorderseite her in die unterste Anschlussvorrichtung eingeführt wird und dieses betätigbar ist, beispielsweise eine dort vorhandene Schraube drehbar ist mit einem Schraubendreher als Werkzeug.
Als Maß für den minimalen Betätigungswinkel α kann auch der Winkel der Verbindungslinie der Oberkante der Vorderseite zur untersten Anschlussvorrichtung gegen die Horizontale gewählt werden. Bei dem minimalen Betätigungswinkel α handelt es sich um ein praktisches Maß, das entsprechend der genauen Ausführung des Gerätes zu bestimmen ist.

Wegen dieser schrägen Ausformung des Gerätes ist es nun ermöglicht, insbesondere im rückwärtigen Teil eine große Platine vorzusehen, die insbesondere Anschlussvorrichtungen 3 aufweist. Das Steckverbinderteil 5 ist im Unterteil mechanisch gehalten und elektrisch sind Leitungen zwischen diesem Steckverbinderteil 5 und Anschlussvorrichtungen 3 vorgesehen.

Die Leiterplatte 6 ist zwar groß ausgeführt, aber nicht so groß, dass der Wert des minimal notwendigen Hubes h beeinflusst wäre. Denn die Leiterplatte 6 ist noch im Inneren des Unterteils 2 positioniert.

Durch die seitlich schräg verlaufende Gehäusekontur an der Schnittstelle zwischen Ober- und Unterteil, wo auch die Dichtung zwischen vorgesehen ist, wird erreicht, dass das Oberteil nur in geringem Maße angehoben werden muss, um es dann nach vorne wegnehmen zu können. Der Raumbereich oberhalb des Gerätes kann begrenzt sein durch weitere Vorrichtungen, wie Schutzzäune oder andere fest montierte Geräte. Gleichzeitig kann durch die schräge Ausführung eine gute Zugänglichkeit der Anschlussklemmen im Geräte-Unterteil gewährleistet werden.

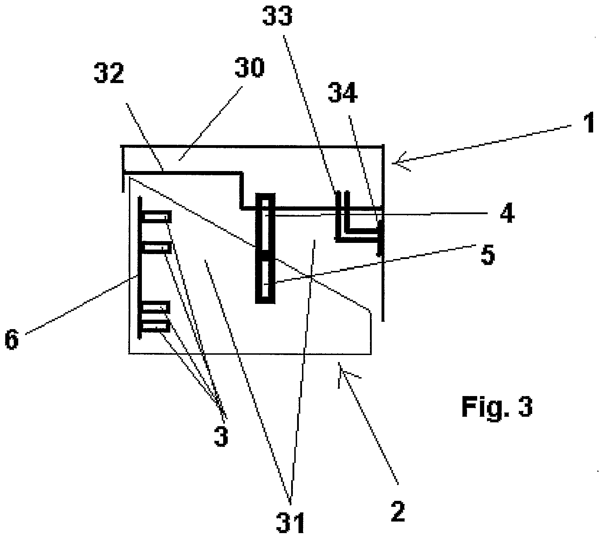

In Figur 3 ist das Doppelkammerprinzip näher gekennzeichnet. Die erste Kammer 30 ist für den Raumbereich der Elektronik vorgesehen, der von dem für die Anschlussvorrichtungen vorgesehenen Raumbereich, also von der zweiten Kammer 31 dicht und in hoher Schutzart abgetrennt ist. Die Trennlinie zwischen den Bereichen ist mit dem Bezugszeichen 32 gekennzeichnet. Zum Herstellen der hohen Schutzart sind Dichtungen vorgesehen, wobei der Bereich des Steckverbinders (4,5) ebenfalls derart abgedichtet ausgeführt ist, dass der Bereich 30 wasserdicht und auch luftdicht, also in hoher Schutzart, gegen den Bereich 31 angeordnet ist.

Infolge der Schräge kann ein Gehäuse-Durchbruch im Bereich der ersten Kammer 30 im Oberteil, der für eine Leuchtanzeige zum Anzeigen von zumindest Statusinformationen nötig wäre, weiter nach unten verlegt werden in den Raumbereich 31 der Anschlussvorrichtungen 3. Dabei ist der Gehäusedurchbruch aber noch im Oberteil vorgesehen und es muss keine Schnittstelle zur Übergabe von Lichtleitern oder dergleichen ins Unterteil vorgesehen werden. Dies ist in Figur 3 deutlich gezeigt. Im unteren Teil des Oberteils ist das Sichtfenster 34 vorgesehen, dessen Ausleuchtung mittels der Lichtleiter 33 ausgeführt ist, die vom Beriech 30 in den Bereich 31 geführt sind. Der entsprechende Durchgang durch die Berandung 32 ist ebenfalls abgedichtet und in hoher Schutzart ausgeführt. Das Sichtfenster kann auch eine Beschriftung umfassen zur Kenzeichnung der beleuchteten Felder.

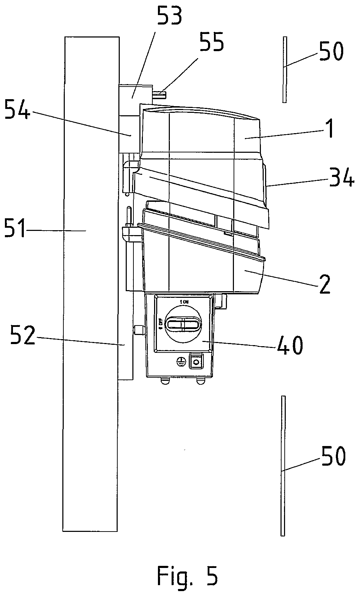

In den Figuren 5 bis 8 ist ein weiteres konkreteres erfindungsgemäßes Ausführungsbeispiel gezeigt.

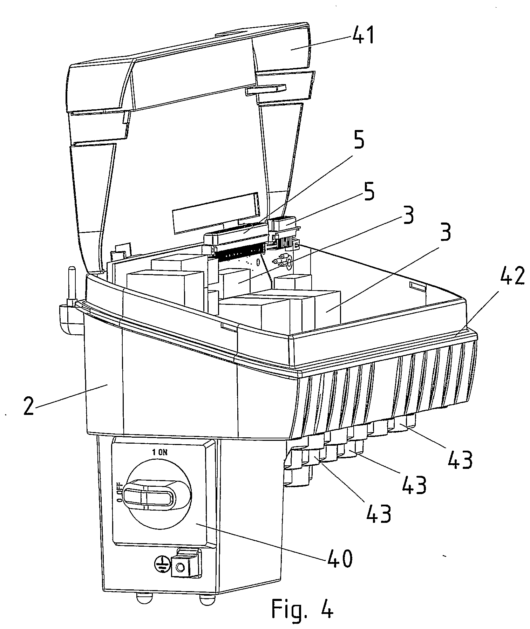

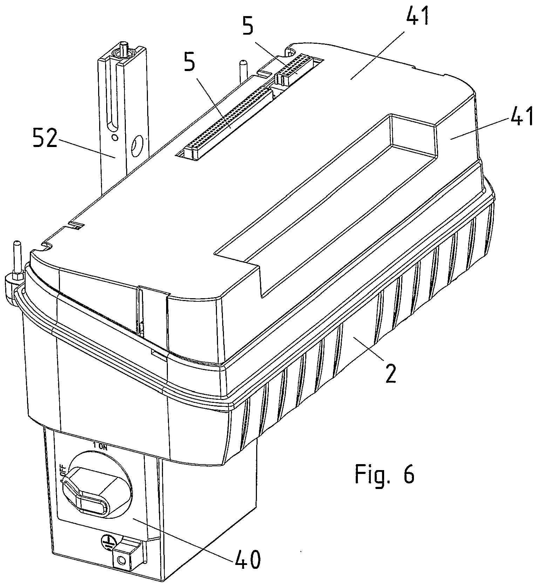

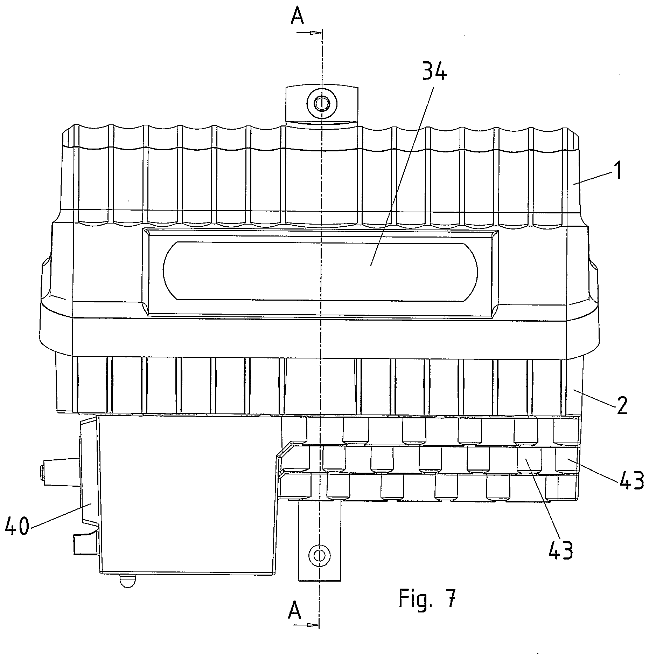

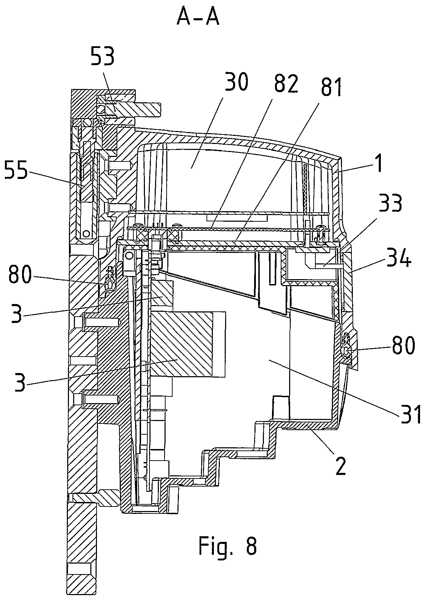

Dabei ist in der Figur 5 eine Seitenansicht des Gerätes, in der Figur 4 das Unterteil mit aufgeklapptem Berührschutz 41, in der Figur 6 das Unterteil mit geschlossenem Berührschutz 41, in der Figur 7 eine Vorderansicht und in der Figur 8 ein Schnittbild gezeigt.

Der Schutzschalter 40 dient zum Abschalten der Stromversorgung und umfasst eine Sicherung gegen Überstrom.

Der Berührschutz 41 ist aufklappbar und ist als Sicherheitselement vorgesehen. Das Unterteil weist eine Dichtfläche 42 zur Auflage der Dichtung 80, mittels welcher die dichte Verbindung des Oberteils und des Unterteils ausführbar ist.

Der Schutzzaun 50 ist im Raumbereich um das Gerät herum angebracht und wirkt begrenzend auf den Bereich der Betätigung des Geräts, insbesondere bei der Wartung.

Das Gerät ist an der Wand 51 montiert. Dazu ist die Führungsschiene 52 lösbar mit der Wand mittels Schrauben verbunden. An der Führungsschiene 52 ist das Unterteil 2 angeschraubt. Das aufgesetzte Oberteil 1 ist abhebbar, indem ein Werkzeug an die Werkzeugaufnahme 55 angesetzt wird und mittels dieser der Winkeltrieb 53 betätigt wird. Dieser setzt die Drehung von der horizontalen in die vertikale Drehung um und betätigt so die Abhebevorrichtung 54, welche ein Abheben des Oberteils 1 entlang der Führungsschiene 52 ermöglicht. Nach Ausführung eines gewissen Hubes h ist das Oberteil 1 nach vorne zum Bediener aus dem Schutzzaun 50 heraus abziehbar.

Wegen der schrägen Ausführung des Unterteils 2 ist der minimale Betätigungswinkel α sehr klein und die Anschlussvorrichtungen sind daher gut zugänglich. Obwohl also der Raumbereich der Bedienung und Betätigung des Gerätes sehr klein ist, ist dem Bediener genügend viel Arbeitsraum bereit gestellt zur Betätigung des Gerätes. Dazu ist insbesondere das Herstellen der Verdrahtung an den Anschlussvorrichtungen 3 zu berücksichtigen. Denn dabei muss beispielsweise mit der Hand ein Draht in eine Anschlussvorrichtung eingesteckt werden und dann diese mit einem Schraubendreher betätigt werden.

Zwischen Oberteil und Unterteil ist zur Herstellung der dichten Verbindung und hohen Schutzart eine Dichtung 80 vorgesehen. Diese verläuft am Umfang des Gerätes entsprechend der schrägen Ausführung. Dies bedeutet, dass die Dichtung 80 an der Rückseite, also zur Wand 51 hin, höher vorgesehen ist als an der Vorderseite. An den Seitenwänden nimmt die Höhe, auf der die Dichtung 80 vorgesehen ist, von hinten nach vorne ab.

Die Leiterplatte für Elektronik ist im Raumbereich 30 horizontal vorgesehen. Dadurch ist für das Sichtfenster 34 im unteren Bereich an der Vorderseite des Oberteils Platz geschaffen. Die Lichtleiter 33 versorgen das Sichtfenster 34 mit Licht von Leuchtmitteln, die auf der Leiterplatte 82 vorgesehen sind.

Das Blech 81 ist horizontal angeordnet und dichtet den Bereich 30 vom Bereich 31 ab. Die Leiterplatte 82 für Elektronik ist mittels Schrauben in Bolzen befestigt, welche in Sacklöchern des Bleches 81 angeordnet sind.

Das Unterteil weist Ausnehmungen als Kabeldurchlass auf, in welchen PG-Verschraubungen oder entsprechende Komponenten vorgesehen sind. Durch diese Ausnehmungen sind also Energie- und Informations-Versorgungsleitungen durchführbar.

## Patentansprüche

1. Gerät, umfassend zumindest ein Oberteil (1), das auf ein Unterteil (2) aufsetzbar ist,
wobei das Oberteil (1) mindestens eine elektronische Schaltung **und mindestens ein Steckverbinderteil (4)** und das Unterteil (2) mindestens **das entsprechende Gegensteckverbinderteil (4) und** Anschlussvorrichtungen (3) umfasst,
**wobei**
die Oberkante des Unterteils (2) von der Rückseite zur Vorderseite hin schräg abnehmend verläuft, insbesondere zur Erreichung eines möglichst kleinen Betätigungswinkels für die unterste Anschlussvorrichtung (3),
**und**
**beim Aufsetzen des Oberteils (1) auf das Unterteil (2) bzw. beim Abnehmen des Oberteils (1) vom Unterteil (2) die Steckverbindung, umfassend Steckverbinderteil (4) und Gegensteckverbinderteil (4), verbunden bzw. getrennt wird.**

2. Gerät nach mindestens einem der vorangegangenen Ansprüche,
**dadurch gekennzeichnet, dass**
eine Leiterplatte (6) vertikal orientiert ist.

3. Gerät nach mindestens einem der vorangegangenen Ansprüche,
**dadurch gekennzeichnet, dass**
die Vorderseite eine geringere Höhe aufweist als die Rückseite des Unterteils (2) und das Oberteil (1) entsprechend schräg ausgeführt ist.

4. Gerät nach mindestens einem der vorangegangenen Ansprüche,
**dadurch gekennzeichnet, dass**
zwischen Oberteil (1) und Unterteil (2) eine Dichtung (80) angeordnet ist, welche das Oberteil (1) von außen und das Unterteil (2) von innen umgibt,

5. Gerät nach mindestens einem der vorangegangenen Ansprüche,
**dadurch gekennzeichnet, dass**
Anschlussvorrichtungen (3) des Unterteils (2) auf einer Leiterplatte (6) angeordnet sind.

6. Gerät nach mindestens einem der vorangegangenen Ansprüche,
**dadurch gekennzeichnet, dass**
die Rückseite des Gerätes mit einer Führungsschiene (52) verbunden ist.

7. Gerät nach mindestens einem der vorangegangenen Ansprüche, **dadurch gekennzeichnet, dass**
mittels der Führungsschiene (52) das Oberteil (1) vom Unterteil (2) um einen Hub abhebbar ist, währenddessen Ausführung Steckverbinderteil (4) und Gegensteckverbinderteil (4) verbindbar oder trennbar sind und wobei der Hub gleich oder größer ist als der für das Verbinden oder Trennen notwendige Hub.

8. Gerät nach mindestens einem der vorangegangenen Ansprüche, **dadurch gekennzeichnet, dass**
mittels der Führungsschiene (52) das Oberteil (1) vom Unterteil (2) um einen Hub abhebbar ist, währenddessen Ausführung die dichte Verbindung zwischen Oberteil (1) und Unterteil (2) lösbar ist.

9. Gerät nach mindestens einem der vorangegangenen Ansprüche, **dadurch gekennzeichnet, dass**
an der Vorderseite das Oberteil (1) eine beleuchtete Anzeige aufweist, wobei Lichtleiter (33) aus dem Raumbereich der elektronischen Schaltung von dort vorhandenen Leuchtmitteln Licht zur Anzeige leiten.

10. Gerät nach mindestens einem der vorangegangenen Ansprüche, **dadurch gekennzeichnet, dass**
der Raumbereich der elektronischen Schaltung abgedichtet und/oder in hoher Schutzart ausgeführt ist gegen den Raumbereich der Anschlussvorrichtung (3) und gegen die Umgebung.

11. Gerät nach mindestens einem der vorangegangenen Ansprüche, **dadurch gekennzeichnet, dass**
ein aufklappbarer Berührschutz am Unterteil (2) vorgesehen ist.

12. Gerät nach mindestens einem der vorangegangenen Ansprüche, **dadurch gekennzeichnet, dass**
das Gerät in einer anderen räumlichen Position einbaubar ist, wobei dann
- das gerät an seiner Rückseite montiert ist,
- an seiner Vorderseite zur Betätigung zugänglich ist,
- die Hubbewegung parallel zur Normalenrichtung der Unterseitenebene des Unterteils (2) auszuführen ist,
nach Ausführens der Hubbewegung zum Trennen des Unterteils (2) und des Oberteils (1) das Oberteil (1) in Richtung parallel zur Normalenrichtung der Vorderseitenebene und/oder Rückseitenebene abnehmbar ist.

## Claims

1. A device, comprising at least an upper part (1) which can be placed on a lower part (2),
wherein the upper part (1) comprises at least one electronic circuit and at least one plug-in connector part (4) and the lower part (2) comprises at least the corresponding mating connector part (4) and connection means (3),
wherein
the upper edge of the lower part (2) runs tapering from the rear side towards the front side, in particular in order to achieve as small as possible an actuation angle for the lowermost connection means (3),
and
upon placing the upper part (1) on the lower part (2) or upon removing the upper part (1) from the lower part (2) the plug-in connection, comprising the plug-in connector part (4) and mating connector part (4), is connected or disconnected, respectively.

2. A device according to at least one of the preceding claims,
**characterised in that**
a printed circuit board (6) is oriented vertically.

3. A device according to at least one of the preceding claims,
**characterised in that**
the front side has a lesser height than the rear side of the lower part (2), and the upper part (1) is designed to be correspondingly tapering.

4. A device according to at least one of the preceding claims,
**characterised in that**
a seal (80) is arranged between the upper part (1) and lower part (2), which seal surrounds the upper part (1) from the outside and the lower part (2) from the inside.

5. A device according to at least one of the preceding claims,
**characterised in that**
connection means (3) of the lower part (2) are arranged on a printed circuit board (6).

6. A device according to at least one of the preceding claims,
**characterised in that**
the rear side of the device is connected to a guide rail (52).

7. A device according to at least one of the preceding claims,
**characterised in that**
by means of the guide rail (52) the upper part (1) can be lifted off from the lower part (2) by a lifting motion, during the performing of which the plug-in connector part (4) and mating connector part (4) can be connected or disconnected, and the lifting motion being equal to or greater than the lifting motion necessary for connecting or disconnecting.

8. A device according to at least one of the preceding claims,
**characterised in that**
by means of the guide rail (52) the upper part (1) can be lifted off from the lower part (2) by a lifting motion, during the performing of which the tight connection between the upper part (1) and lower part (2) can be released.

9. A device according to at least one of the preceding claims,
**characterised in that**
on the front side the upper part (1) has an illuminated display, with fibre-optic conductors (33) conducting light out of the spatial region of the electronic circuit from light-emitting means present there to the display.

10. A device according to at least one of the preceding claims,
**characterised in that**
the spatial region of the electronic circuit is embodied sealed off and/or with a high degree of protection from the spatial region of the connection means (3) and from the surroundings.

11. A device according to at least one of the preceding claims,
**characterised in that**
an unfoldable touching protection means is provided on the lower part (2).

12. A device according to at least one of the preceding claims,
**characterised in that**
the device can be installed in a different spatial position, in which case then
- the device is mounted on its rear side,
- is accessible on its front side for actuation purposes,
- the lifting movement is to be carried out parallel to the normal direction of the underside plane of the lower part (2),
after performing the lifting movement to disconnect the lower part (2) and the upper part (1), the upper part (1) can be removed in the direction parallel to the normal direction of the front side plane and/or rear side plane.

## Revendications

1. Appareil comprenant au moins une partie supérieure (1) pouvant être mise en place sur une partie inférieure (2),
ladite partie supérieure (1) incluant au moins un circuit électronique et au moins une pièce (4) de connexion enfichable, et ladite partie inférieure (2) incluant au moins la pièce complémentaire (4) de connexion enfichable correspondante, et des dispositifs de raccordement (3),
sachant que
l'arête supérieure de la partie inférieure (2) s'étend avec décroissance à l'oblique, de la face postérieure vers la face antérieure, notamment en vue d'atteindre un angle d'actionnement le plus petit possible pour le dispositif de raccordement (3) situé le plus bas,
et que
la liaison par enfichage, comprenant la pièce (4) de connexion enfichable et la pièce complémentaire (4) de connexion enfichable, est respectivement instaurée ou supprimée lors de la mise en place de la partie supérieure (1) sur la partie inférieure (2) ou, respectivement, lors de la dissociation de ladite supérieure (1) d'avec ladite partie inférieure (2).

2. Appareil selon au moins l'une des revendications précédentes, **caractérisé par le fait**
**qu'**une plaquette imprimée (6) est orientée verticalement.

3. Appareil selon au moins l'une des revendications précédentes, **caractérisé par le fait que**
la face antérieure présente une hauteur moindre que celle de la face postérieure de la partie inférieure (2), et la partie supérieure (1) est réalisée avec obliquité correspondante.

4. Appareil selon au moins l'une des revendications précédentes, **caractérisé par le fait**
**qu'**une garniture d'étanchement (80), interposée entre la partie supérieure (1) et la partie inférieure (2), ceinture ladite partie supérieure (1) depuis l'extérieur et ladite partie inférieure (2) depuis l'intérieur.

5. Appareil selon au moins l'une des revendications précédentes, **caractérisé par le fait que**
des dispositifs de raccordement (3) de la partie inférieure (2) sont implantés sur la plaquette imprimée (6).

6. Appareil selon au moins l'une des revendications précédentes, **caractérisé par le fait que**
la face postérieure dudit appareil est reliée à un rail de guidage (52).

7. Appareil selon au moins l'une des revendications précédentes, **caractérisé par le fait que**
la partie supérieure (1) peut être soulevée à l'écart de la partie inférieure (2), au moyen du rail de guidage (52), d'une course lors de l'exécution de laquelle la pièce (4) de connexion enfichable et la pièce complémentaire (4) de connexion enfichable peuvent être reliées ou dissociées, ladite course étant égale ou supérieure à la course nécessaire à la liaison ou à la dissociation.

8. Appareil selon au moins l'une des revendications précédentes, **caractérisé par le fait que**
la partie supérieure (1) peut être soulevée à l'écart de la partie inférieure (2), au moyen du rail de guidage (52), d'une course lors de l'exécution de laquelle il est possible de supprimer la liaison étanche entre ladite partie supérieure (1) et ladite partie inférieure (2).

9. Appareil selon au moins l'une des revendications précédentes, **caractérisé par le fait que**
la face antérieure de la partie supérieure (1) est pourvue d'un affichage éclairé, sachant que des conducteurs de lumière (33) guident de la lumière vers ledit affichage, hors de la zone spatiale du circuit électronique, à partir de moyens lumineux présents dans cette région.

10. Appareil selon au moins l'une des revendications précédentes, **caractérisé par le fait que**
la zone spatiale du circuit électronique est de réalisation étanche et/ou à type de protection élevé vis-à-vis de la zone spatiale du dispositif de raccordement (3), et vis-à-vis de l'espace environnant.

11. Appareil selon au moins l'une des revendications précédentes, **caractérisé par le fait**
**qu'**une protection prévenant un contact, apte à l'ouverture par pivotement, est prévue sur la partie inférieure (2).

12. Appareil selon au moins l'une des revendications précédentes, **caractérisé par le fait que**
ledit appareil peut être intégré en un emplacement autre dans l'espace, auquel cas
- ledit appareil est monté à sa face postérieure,
- est accessible à sa face antérieure, en vue de l'actionnement,
- le mouvement de soulèvement doit être effectué parallèlement à la direction perpendiculaire au plan de la face inférieure de la partie inférieure (2),
après exécution dudit mouvement de soulèvement ciblant la séparation de la partie inférieure (2) et de la partie supérieure (1), ladite partie supérieure (1) peut être enlevée dans une direction parallèle à la direction perpendiculaire au plan de la face antérieure, et/ou au plan de la face postérieure.
